# EUROPÄISCHE PATENTSCHRIFT

(11) **EP 2 871 977 B1**
(45) Veröffentlichungstag und Bekanntmachung des Hinweises auf die Patenterteilung: **03.05.2017**
(21) Anmeldenummer: 13740207.9
(22) Anmeldetag: 12.07.2013
(51) Int. Cl.: A23L 13/70, A23B 4/03, A23B 4/023, A22C 9/00

(54) **FLEISCHREIFEKAMMER**
MEAT MATURING CABINET
CHAMBRE DE MATURATION DE VIANDE

(30) Priorität: 14.07.2012 DE 202012006924 U; 13.02.2013 DE 102013002402
(43) Veröffentlichungstag der Anmeldung: 20.05.2015
(73) Patentinhaber: Schrutka-Peukert GmbH, 95326 Kulmbach (DE)
(72) Erfinder: PÄSLER, Hans-Jürgen, 95326 Kulmbach (DE); HERBST, Mario, 96326 Küps (DE)
(74) Vertreter: Blumbach Zinngrebe
(86) Internationale Anmeldenummer: PCT/EP2013/002076
(87) Internationale Veröffentlichungsnummer: WO 2014/012642

(56) Entgegenhaltungen:
- DE-A1- 2 928 680
- US-A1- 2010 310 736
- COMAPOSADA ET AL: "Sorption isotherms of salted minced pork and of lean surface of dry-cured hams at the end of the resting period using KCl as substitute for NaCl", MEAT SCIENCE, ELSEVIER SCIENCE, GB, Bd. 77, Nr. 4, 5. November 2007 (2007-11-05), Seiten 643-648, XP022329017, ISSN: 0309-1740, DOI: 10.1016/J.MEATSCI.2007.05.017

## Beschreibung

Die Erfindung betrifft eine Fleischreifekammer und ein Verfahren zur Reifung von Fleisch.

Um die Fleischqualität zu verbessern, wird rohes Fleisch kontrolliert gelagert. Diese Lagerung wird als Abhängen oder Fleischreifung bezeichnet. Die Dauer der Fleischreifung hängt von der Tierart, der Fleischqualität und der Größe der Fleischstücke ab. Der Reifungsprozess wird auch als "dry aging" bezeichnet. Im Zusammenhang mit Rindfleisch versteht man dabei unter "dry aged beef" Rindfleisch, welches mehrere Wochen an der Luft bei Temperaturen nahe dem Gefrierpunkt abgehangen wurde. Die geschmackliche Qualität ist bei längerer und trockener Reifezeit hoch, jedoch mit zusätzlichen Kosten für längere Kühllagerung unter optimalen hygienischen Bedingungen verbunden, um den Verderb durch Schimmelbildung oder unerwünschte bakteriell verursachte Verwesungsprozesse wie Fäulnis zu verhindern.

Es ist daher eine Aufgabe der Erfindung, eine Möglichkeit für die Reifung von Fleisch zur Verfügung zu stellen, welche zuverlässig hohe geschmackliche Qualitat erzeugt und Schimmelbildung oder bakteriell verursachte Verwesungsprozesse sicher vermeidet.

Diese Aufgabe wird auf überraschend einfache Weise gelöst mit einer Fleischreifekammer sowie einem Verfahren zur Fleischreifung gemäß den unabhängigen Ansprüchen. Vorteilhafte Weiterbildungen sind Gegenstand der jeweils zugeordneten Unteransprüche.

Die Erfindung stellt eine Fleischreifekammer zur Durchführung eines Verfahrens für die Reifung von Fleisch bei einer Luftfeuchte von 90 % zur Verfügung, welche einen Deckel und einen Boden sowie eine Vorderwand, eine Rückwand und zwei Seitenwände umfaßt, wobei diese Wände mit Deckel und Boden einen Innenraum zur Aufnahme zumindest eines Fleischstücks definieren und deren dem Innenraum zugewandte Flächen im Wesentlichen aus Edelstahl und/oder einem Kunststoff bestehen, wobei zumindest die Vorderwand zumindest ein Fenster aufweist, welches Einblick in den Innenraum erlaubt, und wobei die Fleischreifekammer mit zumindest einer Salzquelle in Form einer Salzwand aus mehreren Salzbausteinen im Innenraum ausgestattet ist, welche im Betrieb der Fleischreifekaromer den Salzgehalt der Atmosphäre im Innenraum bestimmt, wobei die Salzwand auf einem Sockeltisch fußt, welcher auf dem Boden der Fleischreifekammer steht oder an zumindest einer Wand oder dem Deckel der Fleischreifekammer befestigt ist, wobei der Sockeltisch in Relation zur Tiefe der Salzwand derartige Abmessungen hat, dass an zumindest einer Seite ein Überstand des Sockeltisches gegenüber der Salzwand definiert wird, wobei in dem Überstand eine Rinne im Wesentlichen parallel zur Salzwand verläuft, und wobei im Innenraum eine Steuerungseinheit für Luftfeuchtigkeit und Temperatur angeordnet ist und im Innenraum, bevorzugt am Deckel der Fleischreifekammer, zumindest eine Verdampfereinheit angeordnet und mit der Steuerungseinheit verbunden ist.

Ein Nachteil der üblichen Fleischreifung, auch bei der "dry aged beef"-Methode, ist die Entstehung von Schimmel und der Verwesungsgeruch. Die Fleischreifekammer gemäß der Erfindung verhindert dies durch den Einsatz einer Salzquelle in Form einer Salzwand aus mehreren Salzbausteinen im Innenraum der Reifekammer. Die Salzquelle reichert durch feine Salzpartikel die Luft an. Durch die hygroskopisch Wirkung des Salzes wird der Prozess der Trocknung und damit der Reifung des Fleisches gefördert,

Als Werkstoff für die dem Innenraum zugewandten Flächen der Wände sowie des Deckels und des Bodens der FLeischreifekammer kommen grundsätzlich alle für den Einsatz im Kontakt mit rohem Fleisch gemäß den jeweils gültigen Vorschriften des Lebensmittelrechts Werkstoffe in Betracht, neben Edeltstahl daher auch entsprechend geeignete Kunststoffe. Die Wände weisen eine Isolierung auf, um die Temperatur im Innenraum der Fleischreifekammer unabhängig von der Außentemperatur einstellen zu können. Das Fenster kann geöffnet werden zum Zugriff auf Fleischstücke und/oder zu deren optischer Kontrolle.

Gemäß der Erfindung wird als Salzquelle eine Salzwand aus mehreren Salzbausteinen eingesetzt. Als besonders gut geeignet erwiesen hat sich dabei eine Salzwand gemäß dem Patent DE 10 2010 006 688 B4, bei welcher die Salzbausteine rein mechanisch formschlüssig miteinander verbunden sind.

Im Rahmen der Erfindung ist es möglich, als Salzquelle im Innenraum der Fleischreifekammer zusätzlich zumindest einen Solevernebler einzusetzen. Dafür kommen unterschiedliche Bauformen bis hin zu der des Gradierwerks in Frage. Entscheidend für die Erfindung ist die möglichst weitgehende Anreicherung der Luft im Innenraum der Reifekammer mit Salz in Form von Salzpartikeln oder in Form von Salzpartikeln und Tröpfchen von wässriger Salzlösung. Als Salz kann im einfachsten Fall Kochsalz für den Betrieb mit Soleverneblern eingesetzt werden. Im Rahmen der Erfindung können jedoch auch Salzarten mit weiteren Bestandteilen wie beispielsweise Himalayasalz für Salzbausteine zum Einsatz kommen.

Die erfindungsgemäße Fleischreifekammer kann im einfachsten Fall mit einem Fenster ausgerüstet sein, welches geöffnet und geschlossen werden kann und so neben dem Einblick in die Kammer den Zugriff auf die Fleischstücke ermöglicht. In einer Weiterbildung der Erfindung kann das Fenster auch als Schaufenster gestaltet sein, welches allein den Einblick in die Kammer erlaubt. Um die Reifekammer begehbar zu gestalten, kann diese mit einer Zugangstür für den Zutritt zum Innenraum versehen werden. Der Innenraum kann insbesondere eine Grundfläche mit Seitenlängen gleich oder größer als etwa 800 mm und einer Höhe gleich oder größer als etwa 2000 mm aufweisen, damit er neben den dort gelagerten Fleischstücken genügend Platz für eine Person läßt. Dies ist insbesondere dann von Vorteil, wenn die Fleischreifekammer gemäß der Erfindung als Baustein in einer industriellen Fleischverarbeitungsstraße oder als Modul eines Verkaufsraums einer Metzgerei eingesetzt wird.

Damit das Fleisch in der Reifekammer auch bei den dort herrschenden niedrigen Temperaturen zuverlässig beobachtet werden kann sieht die Erfindung des Weiteren vor, dass das Fenster Isolierglas umfaßt, insbesondere Dreifach-Isolierglas, bevorzugt entspiegeltes Dreifach-Isolierglas.

Die Erfindung bietet je nach Anwendungsfall verschiedene Möglichkeiten, Fleischstücke in der Fleischreifekammer zu positionieren. So kann die Fleischreifekammer im Innenraum zumindest eine Aufhängevorrichtung zur hängenden Lagerung von Fleischstücken und/oder ein Regal mit zumindest einem Regalboden, bevorzugt zumindest zwei Regalböden, aufweisen, auf welchen Fleischstücke positioniert werden können, wobei die Aufhängevorrichtung und/oder das Regal im Wesentlichen aus Edelstahl und/oder Kunststoff besteht.

Für die Salzwand, als Salzquelle hat es sich als vorteilhaft herausgestellt, im Innenraum der Reifekammer einen Sockeltisch bereitzustellen, auf welchem die Salzwand fußt, wobei der Sockeltisch auf dem Boden der Fleischreifekammer steht oder an zumindest einer Wand oder dem Deckel der Fleischreifekammer befestigt ist. So steht die Salzwand auf einem sicheren eigenen Träger, welcher insbesondere federnd und/oder gedämpft gelagert sein kann, damit die Salzwand bei Erschütterungen der Reifekammer in ihrer mechanischen Belastung geschont wird.

Da der Prozess der Fleischreifung mit einer Trocknung des Fleisches einhergeht, haben die Erfinder erkannt, dass die Fleischreifekammer gemäß der Erfindung verbessert ist, indem die Abfuhr des Wassers, welches dem Fleisch entzogen wird, konstruktiv unterstützt wird. Dies ist beim Einsatz der Salzwand als Salzquelle vorteilhaft. Die Erfindung sieht dazu vor, den Sockeltisch mit derartigen Abmessungen zu dimensionieren, dass an zumindest einer Seite ein Überstand gegenüber der Salzwand definiert wird, wobei in den Überstand eine Rinne eingelassen ist, welche im wesentlichen parallel zur Salzwand verläuft, Diese Rinne dient der Abfuhr von Wasser, das in der Umgebung der Salzwand anfällt und für die Trocknung des Fleisches der Reifekammer entzogen werden soll.

In einer Weiterbildung der erfindungsgemäßen Reifekammer weist die Rinne zumindest einen Abfluss auf, welcher insbesondere mit einem Ablaufventil verschließbar ist. Über einen solchen Abfluss beziehungsweise ein entsprechendes Ablaufventil kann die Wasserabfuhr der Reifekammer angeschlossen werden an eine Entwässerungsleitung. Die Fleischreifekammer kann beispielsweise im Rahmen der Erfindung als in sich geschlossenes Modul in bestehende Räumlichkeiten integriert werden, in denen ein entsprechender Anschluss für das Abwasser zur Verfügung gestellt wird. Dazu kann die Fleischreifekammer im Rahmen der Erfindung des Weiteren Durchbrüche in Deckel und/oder Boden und/oder Wänden für zumindest eine Stromleitung und/oder zumindest eine Wasserleitung und/oder zumindest eine Kältemittelleitung umfassen.

Um eine zuverlässige Zirkulation der Luft im Innenraum der erfindungsgemäßen Fleischreifekammer zu ermöglichen, ist vorgesehen, dass die Salzwand zur nächsten benachbarten Wand der Fleischreifekammer beabstandet angeordnet ist, insbesondere zu deren Rückwand, wobei der Abstand zwischen der Salzwand und der nächsten benachbarten Wand der Fleischreifekammer insbesondere der Dicke der Salzwand entspricht und beispielsweise im Bereich zwischen etwa 10 mm und etwa 120 mm, bevorzugt bei etwa 50 mm liegt.

Um die Prozessparameter für die Fleischreifung kontrollieren und einstellen zu können, ist im nnenraum der Fleischreifekammer eine Steuerungseinheit für Luftfeuchtigkeit und Temperatur angeordnet, so dass Luftfeuchtigkeit und Temperatur gesteuert und/oder geregelt und/oder eingestellt werden können. Des Weiteren kann im Innenraum, bevorzugt an der Decke der Fleischreifekammer, zumindest ein Wärmeüberträger angeordnet und mit der Steuerungseinheit verbunden sein, insbesondere ein Luftkühler, bevorzugt ein mit Kältemittel betriebener Luftkühler.

Durch Einsatz eines Luftkühlers für Räume, in denen Temperatur und Luftfeuchtigkeit geregelt wird, können so auf einfache Art und Weise die für die Reifung des Fleisches wesentlichen Einflussgrößen Temperatur und Luftfeuchtigkeit eingestellt werden. Gemäß der Erfindung ist im Innenraum, bevorzugt an der Decke der Fleischreifekammer, zumindest eine Verdampfereinheit angeordnet und mit der Steuerungseinheit verbunden. Vorzugsweise ist diese Verdampfereinheit ein integraler Bestandteil des Luftkühlers.

Um die Istwerte der Parameter Luftfeuchtigkeit und Temperatur aufnehmen zu können, sind gemäß einer weiteren Ausführungsform der Erfindung im Innenraum der Fleischreifekammer zumindest ein Hygrometer und zumindest ein Thermometer angeordnet und mit der Steuerungseinheit verbunden. In der Steuerungseinheit wird zudem wenigstens je ein Sollwert für Temperatur und Luftfeuchtigkeit bereitgestellt, so dass die Steuerungseinheit durch Vergleich der betreffenden Istwerte mit den Sollwerten einen Regeleingriff durch Luftkühler und/oder Verdampfereinheit veranlassen kann, um die geforderten Werte während des Betriebs der erfindungsgemäßen Fleischreifekammer einzuhalten.

Um die Fleischstücke unabhängig von den äußeren Lichtverhältnissen sehen und diese im Fall des Einsatzes mit Schaufenster für Kunden einer Metzgerei gut ausleuchten zu können, ist gemäß einer Weiterbildung der Erfindung vorgesehen, dass im Innenraum zumindest eine Lampe zur Beleuchtung von Fleischstücken und/oder zumindest eine Lampe zur Beleuchtung der Salzwand, insbesondere zwischen der Salzwand und der nächsten benachbarten Wand, angebracht ist. Insbesondere können zwischen der Salzwand und der nächsten benachbarten Wand mehrere Lampen, bevorzugt mehrere LED-Leuchten, angebracht sein, um die Salzwand für den Betrachter von hinten zu beleuchten und so die optische Wirkung des Salzes zu unterstrichen. Es sei an dieser Stelle darauf hingewiesen, dass die Salzwand im Rahmen der Erfindung in Relation zum Fenster der Fleischreifekammer selbstverständlich auch an jeder anderen Wand außer der dem Fenster gegenüberliegenden Wand positioniert sein kann, beziehungsweise dass mehr als eine Salzwand in der Fleischreifekammer angeordnet sind.

Der Trocknungs- und Reifeprozess findet gemäß der Erfindung bevorzugt in einer begehbaren und einsehbaren Reifekammer statt. Neu ist die beleuchtete Rückwand aus Salzsteinen, die einen Salzgrotteneffekt bewirkt. Ein Nachteil der üblichen "Dry aged Beef"-Methode ist die Entstehung von Schimmel und der Verwesungsgeruch. Die Fleischreifekammer gemäß der Erfindung Reifekammer verhindert dies durch den Einsatz einer Salzquelle in Form einer Salzwand im Innenraum der Reifekammer. Diese Salzquelle reichert durch feine Salzpartikel die Luft an. Durch die hygroskopische Wirkung des Salzes wird der Prozess der Trocknung und damit der Reifung des Fleisches gefördert.

Salz wirkt außerdem keimhemmend. Infolgedessen trocknet das Fleisch vollkommen natürlich ohne jegliche Zusätze, Einimpfen von Schimmelkulturen oder ähnlichem.

Durch die Effekte der Salzwand im Innenraum der erfindungsgemäßen Reifekammer werden das Fleisch und die Knochen weder klebrig noch gammelig. Das große, deutlich feststellbare Ausmaß der salzhaltigen Luft hat sogar Pilotkunden der Anmelderin überrascht. Außerdem spart sich der Metzger durch den Salzgrotten-Effekt Arbeitsaufwand, denn das Fleisch muss nicht mehr speziell gegen den Verderb behandelt werden, wie zum Beispiel durch das Einpinseln mit Rindertalg. Die Salzwand spart jedoch nicht nur Zeit. Darüber hinaus ist der Erfolg sicherer als bei den genannten, bisher üblichen Methoden wie Schimmel einzuimpfen oder mit Rindertalg zu bepinseln. Der Effekt der Salzwand ist auch für den Kunden sofort spürbar, wenn sich die Tür der Reifekammer öffnet: Ein angenehm frischer, nussig-würziger Geruch entweicht der Kammer und füllt den Raum,

Ein weiterer innovativer Ansatz ist die Verkaufssituation, die sich beim Einsatz der erfindungsgemäßen Reifekammer in Metzgereien realisieren läßt, beispielsweise für "Dry aged Beef". Die Kundin oder der Kunde steht mit dem Metzger vor der Reifekammer und gemeinsam wird besprochen, welches Fleischstück genommen werden sollte. Ohne trennende Theke - ein Gespräch auf Augenhöhe.

Die Erfindung stellt des Weiteren ein Verfahren für die Reifung von Fleisch mit folgenden Schritten zur Verfügung:
a) Bereitstellen zumindest eines der Reifung zuzuführenden Fleischstücks
b) Einbringen des Fleischstücks in eine Fleischreifekammer gemäß der Erfindung wie oben beschrieben
c) Lagern des Fleischstücks in der Fleischreifekammer bei einer Temperatur im Bereich zwischen etwa 1 und etwa 1,5°C bei einer relativen Luftfeuchtigkeit von 90 %.
   Gemäß einer Weiterbildung kann dazu Schritt
d) Kontrolle des Fleisches nach optischen Eigenschaften seiner Oberfläche und/oder durch Verkostung von Probestücken
   durchgeführt werden, um den Fortschritt des Reifeprozesses anhand der Eigenschaften zu überprüfen, die der Verbraucher wahrnimmt.

Insbesondere ist gemäß der Erfindung vorgesehen, dass die Lagerung für die Dauer im Bereich von etwa vier Wochen bis etwa acht Wochen, bevorzugt für eine Dauer von etwa sechs Wochen durchgeführt wird.

Gemäß der Erfindung entsteht gereiftes Fleisch, insbesondere sogenanntes "Dry aged Beef", also in einem beispielsweise etwa sechs Wochen dauernden Trocknungs- und Reifeprozess. Die verwendeten Fleischstücke, etwa Rinderrücken, werden bei einer Temperatur von etwa 1° Celsius und bei einer Luftfeuchte von etwa 90 % vorzugsweise hängend gelagert, Während dieser Zeit verliert das Fleisch ungefähr 30 % seines Gewichts durch das verdunstete Wasser. Weniger Wasseranteil im Fleisch bedeutet intensiveren Geschmack. Außerdem sind Enzyme am Werk, die das Fleisch unvergleichlich zart machen und ihm einen würzigen, nussigen Geschmack verleihen, Vor dem Verkauf kann ein außen am Fleischstück entstandener Trockenrand entfernt werden. Dieser macht typischerweise noch einmal etwa 10 % des Gesamtgewichts aus,

Die Erfindung wird nachfolgend unter Bezugnahme auf die beigefügten Zeichnungen anhand von Ausführungsbeispielen näher erläutert. Dieselben Bauteile sind dabei mit denselben Bezugszeichen versehen. Es zeigen:
- Figur 1: Eine schematische Darstellung einer Fleischreifekammer gemäß einer ersten Ausführungsform der Erfindung im Längsschnitt von vorne gesehen (oben), als Ausbruch im Längsschnitt von der Seite aus gesehen (links) und im Querschnitt (unten),
- Figur 2: eine schematische Darstellung eines Details entlang des Schnitts A-A in Bezug auf die Darstellung in Figur 1 der Fleischreifekammer gemäß der ersten Ausführungsform der Erfindung,
- Figur 3: eine schematische Darstellung eines Querschnitts durch eine Fleischreifekammer gemäß einer zweiten Ausführungsform der Erfindung unterhalb des Deckels,
- Figur 4: eine schematische Darstellung einer Frontansicht der Fleischreifekammer gemäß einer zweiten Ausführungsform der Erfindung,
- Figur 5: eine schematische Darstellung einer Seitenansicht der Fleischreifekammer gemäß einer zweiten Ausführungsform der Erfindung,
- Figur 6: eine schematische Darstellung eines Längsschnitts der Fleischreifekammer gemäß einer zweiten Ausführungsform der Erfindung von vorne gesehen,
- Figur 7: eine schematische Darstellung eines Längsschnitts der Fleischreifekammer gemäß einer zweiten Ausführungsform der Erfindung von der Seite aus gesehen.

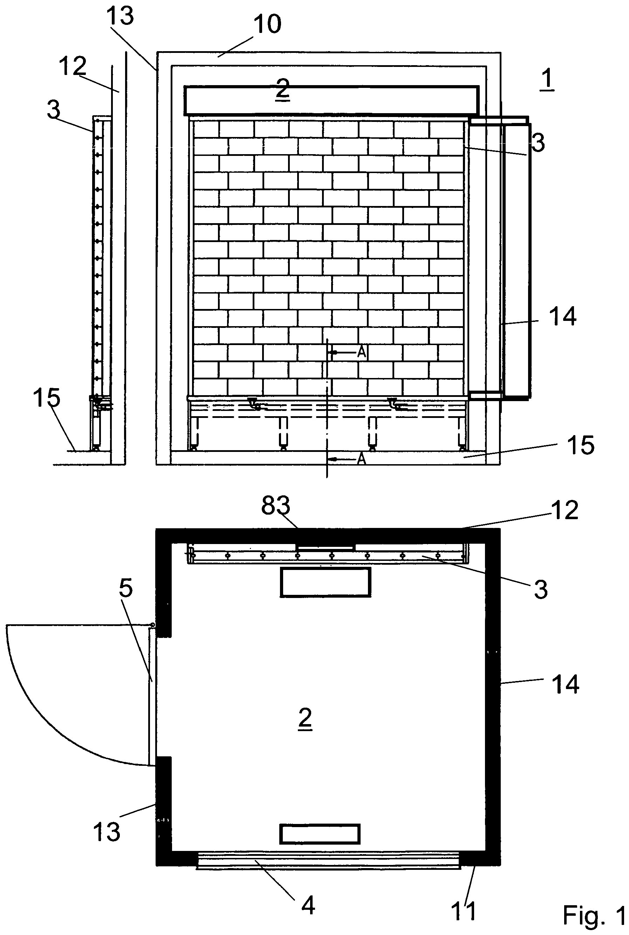

Figur 1 zeigt eine Fleischreifekammer in einer ersten Ausführungsform der Erfindung. Die Fleischreifekammer 1 ist als Kühlzelle ausgebildet und wird oben von ihrem Deckel 10, unten von ihrem Boden 15, vorne von der Vorderwand 11, hinten von der Rückwand 12 sowie seitlich von den beiden Seitenwänden 13, 14 begrenzt, Deckel, Boden, Vorder- und Rückwand sowie die Seitenwände sind isoliert ausgestaltet und zumindest an ihrer dem Inneren der Fleischreifekammer 1 zugewandten Seite mit Edelstahlblechen verkleidet. Der Boden weist dabei eine rutschfeste Oberfläche auf.

Die Wände schließen einen Innenraum 2 ein. Der Innenraum bildet eine Trockenkammer für die Lagerung von Fleisch, insbesondere für die Durchführung des "dry aging" von Rindfleisch. Nicht dargestellt sind Aufhängevorrichtungen für Fleischstücke, welche an der Decke 10 sowie an den Seitenwänden montiert sein können.

Im Innenraum 2 ist eine Salzwand 3 beabstandet von der Rückwand 12 positioniert, um eine gute Luftzirkulation um die Salzwand herum zu ermöglichen. In der Vorderwand 11 ist ein Fenster 4 eingelassen. Durch das Fenster 4 wird der Einblick in den Innenraum 2 und insbesondere auf die Salzwand 3 ermöglicht. Die Seitenwand 13 ist mit einer Tür 5 versehen, so dass die Fleischkammer 1 begehbar ist. Ebenso wie die Wände ist die Tür 5 isoliert. Die Tür ist darüberhinaus innen sowie außen mit Edelstahlblechen verkleidet. In den vorgestellten Ausführungsbeispielen wurde als Edelstahl V4A verwendet.

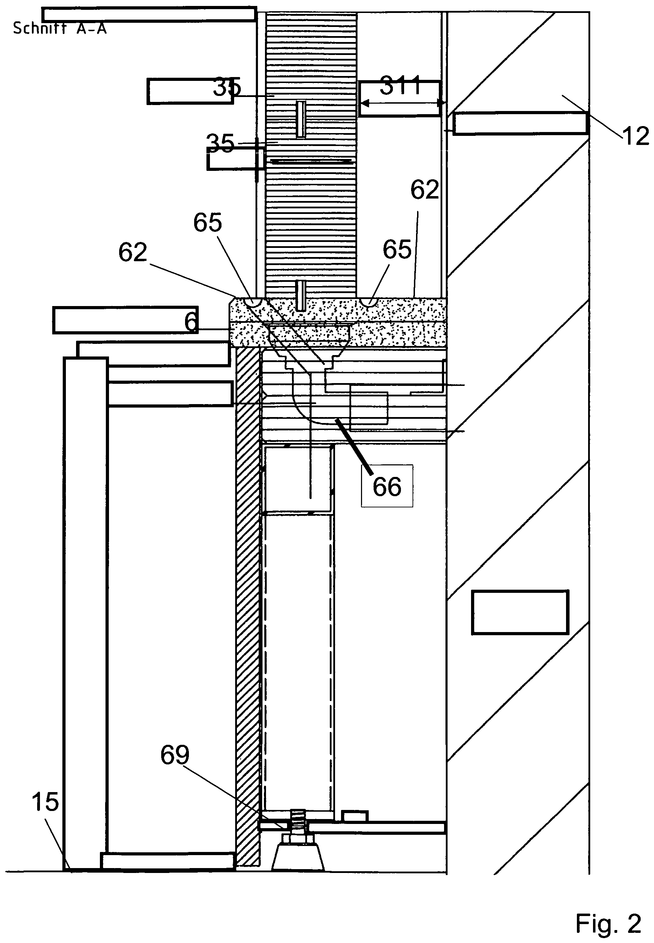

In Figur 2 ist die Lagerung der Salzwand in einem Ausschnitt im Detail dargestellt. Die Salzwand 3 wird aus Salzsteinen 35 gebildet, welche spannungsfrei rein formschlüssig über Nut und Feder-Verbindungen aneinander gehalten werden. Die Salzwand 3 hat von der Kühlzellenrückwand 12 einen Abstand 312. Die Salzwand 3 steht auf einem Sockeltisch 6. Der Sockeltisch ist federnd auf Füßen 69 gelagert, um insbesondere beim Begehen der Fleischreifekammer anfallende Schwingungen zu dämpfen und die Salzwand zu schonen.

Der Sockeltisch 6 hat eine Auflagefläche, welche größer ist als die Tiefe der Salzwand 3, wobei die Tiefe in der Darstellung in Figur 2 als Abmessung der Salzsteine von links nach rechts gemessen sichtbar ist. Durch diese relativen Abmessungen hat der Sockeltisch je einen Überstand 62 vor und hinter der Salzwand, 3. In den Überständen 62 sind Ablaufrinnen 65 eingebracht, welche mit einem Tropfwasserablauf 66 in Verbindung stehen. Wasser, das während des Reife- beziehungsweise Trocknungsprozesses des Fleisches in der Fleischreifekammer 1 im Innenraum 2 anfällt, kann von den Ablaufrinnen 65 aufgefangen und über den Ablauf 66 aus der Fleischreifekammer 1 entfernt werden, Die Auflage des Sockeltisches 6 kann beispielsweise aus dem Mineralwerkstoff Hanex® der Hanwha Europe GmbH, Eschborn, Deutschland gefertigt werden. Dieser Werkstoff läßt sich in geeigneter Weise zur Formgebung bearbeiten und ist gleichzeitig widerstandsfähig gegen Feuchtigkeit und mikrobiellen Befall, was für den Einsatz bei den hohen Hygieneanforderungen in einer Fleischreifekammer vorteilhaft ist.

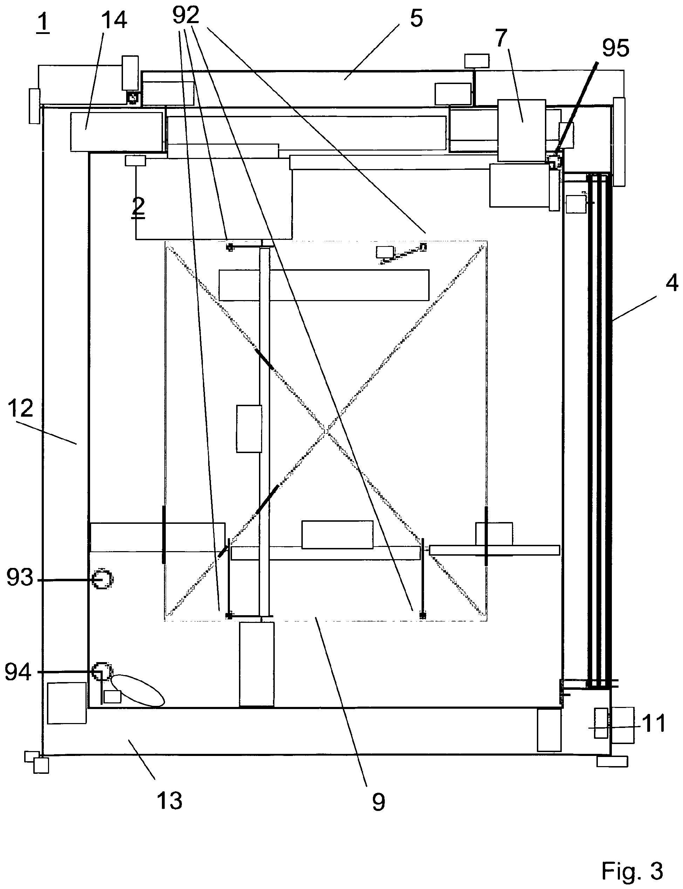

In Figur 3 ist ein Querschnitts durch eine Fleischreifekammer gemäß einer zweiten Ausführungsform der Erfindung unterhalb des Deckels gezeigt. Die zweite Ausführungsform unterscheidet sich von der ersten darin, dass die Tür in der anderen Seitenwand angebracht ist. Dadurch sei illustriert, dass die modulartige Fleischreifekammer gemäß der Erfindung an den jeweiligen Einbauort angepaßt zusammengestellt werden kann. Insbesondere die Abmessungen der Kammer sowie die Positionierung und Orientierung von Fenster und Tür sind variabel. Es liegt dabei auch im Rahmen der Erfindung, mehrere Fenster beziehungsweise Türen vorzusehen oder je nach Größe der Kammer auf eine Tür zu verzichten und das beziehungsweise die Fenster nicht als Schaufenster, sondern als Fenster mit wenigstens einem gangbaren Fensterflügel auszugestalten.

Unter dem Deckel 10 der Fleischreifekammer 1 ist ein Wärmeübertrager 9 über Befestigungen 92 angebracht. Im gezeigten Ausführungsbeispiel wird als Wärmeübertrager ein Spezialluftkühler SV 461 EC "Euroline Plus" der Walter Roller GmbH & Co., Gerlingen, Deutschland eingesetzt. Dabei handelt es sich um einen Wärmeübertrager für den Betrieb mit Sicherheitskältemitteln wie zum Beispiel R134a, R404A, R507A oder R22. Der Wärmeübertrager ist ein Luftkühler für Räume, in denen Temperatur und Luftfeuchtigkeit geregelt werden und umfaßt eine Verdampfereinheit.

Der Wärmeübertrager 9 ist mit einem Wasserzulauf 93 und mit Kältemittelleitungen 94 verbunden. Ebenso ist der Wärmeübertrager 9 mit der Steuereinheit 7 verbunden. Eine Stromzuleitung 95 in die Fleischreifekammer 1 versorgt sämtliche Geräte mit Elektrizität, die in oder an der Reifekammer betrieben werden.

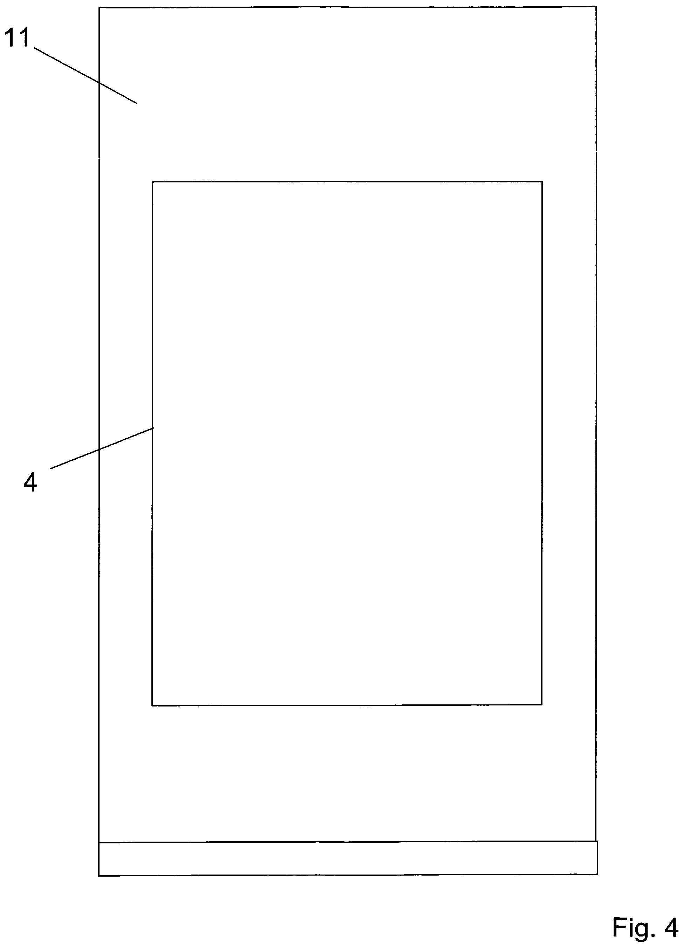

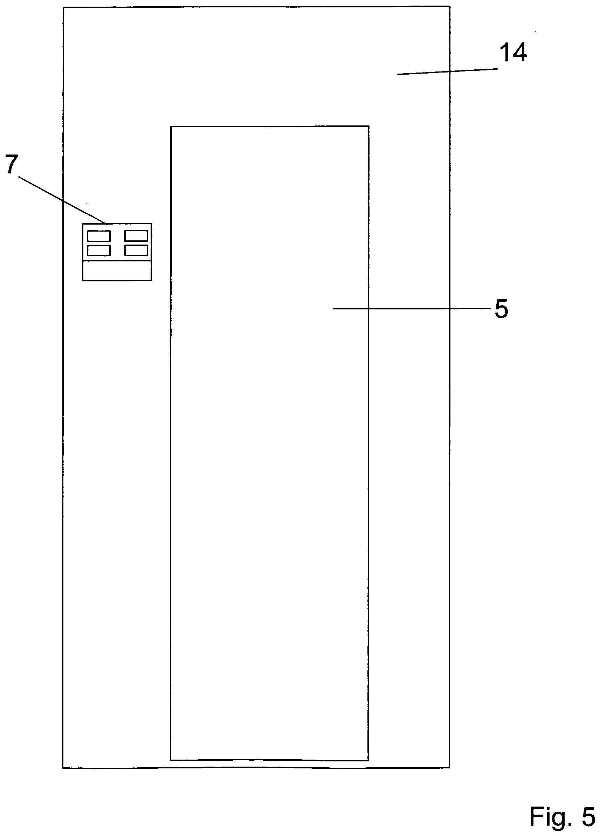

Figur 4 zeigt eine Frontansicht der Fleischreifekammer 1. In die Vorderwand 11 ist das Fenster 4 eingelassen. Figur 5 zeigt eine Seitenansicht der Fleischreifekammer 1. In die Seitenwand 14 ist ein Ausschnitt eingebracht, der mit der Tür 5 verschließbar ist. Von der Seitenwand 14 aus ist auch die Steuereinheit 7 bedienbar. Beispielsweise können so vom Benutzer Sollwerte für Temperatur und Luftfeuchtigkeit im Innenraum 2 eingegeben werden.

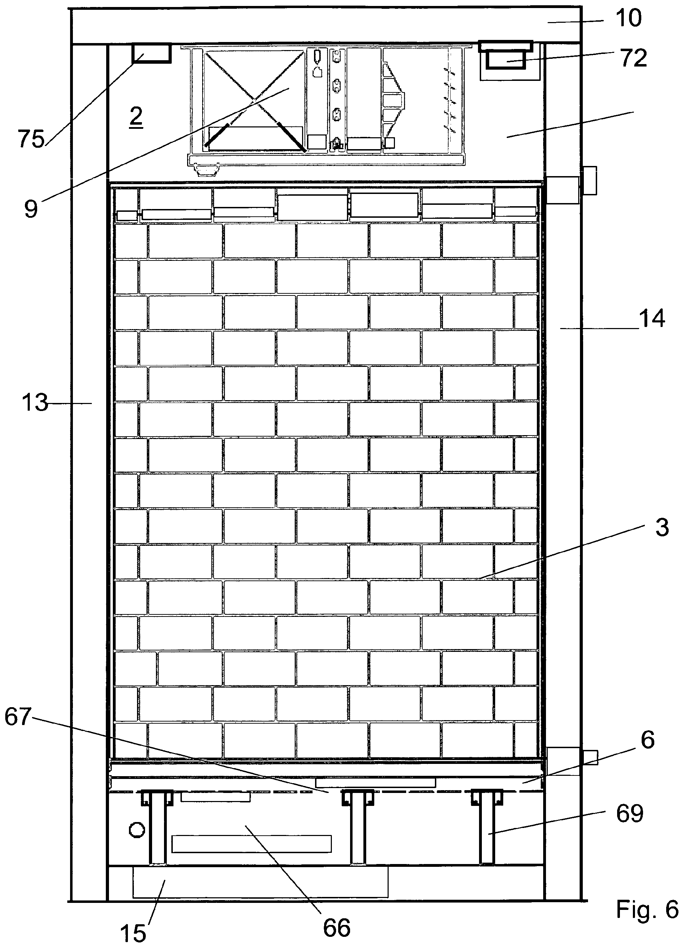

Figur 6 zeigt einen Längsschnitt der Fleischreifekammer 1 von vorne gesehen. Im Innenraum 2 ist am Deckel 10 der Wärmeüberträger 9 angebracht. Des Weiteren ist ein Hygrometer 72 und ein Thermomenter 75, insbesondere eine Temperaturmeßsonde, vorgesehen, welche mit der Steuereinheit 7 verbunden sind (nicht dargestellt). Weichen die mit dem Hygrometer 72 oder dem Thermometer 75 gemessenen Istwerte für Temperatur und Luftfeuchtigkeit von den vorgegebenen Sollwerten ab, wird der Wärmeübertrager in seiner Eigenschaft als Luftkühler zur Regelung der Temperatur und/oder in seiner Eigenschaft als Verdampfereinheit zur Regelung der Luftfeuchtigkeit durch Dampfbefeuchtung von der Steuereinheit 7 angesprochen.

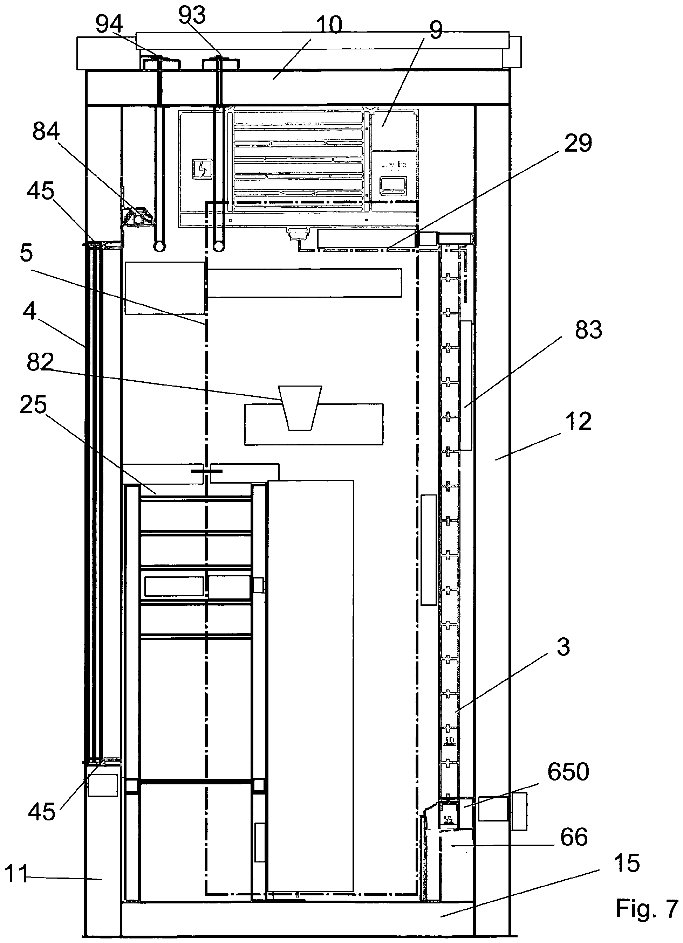

Die Salzwand 3 ist stehend auf dem Sockeltisch 6 gelagert. Die zweite Ausführungsform der Erfindung unterscheidet sich von der ersten des Weiteren in der Gestaltung der Ablaufrinne. Als Alternative zur Auflagefläche mit eingeformten Rinnen 65 kann der Sockeltisch auch eine Auflagefläche aufweisen, welche den Boden einer U-förmigen Ablaufrinne 650 bildet (vergleiche Figur 7). Eine solche Ablaufrinne 650 ist in einfacher Weise aus Edelstahl, beispielsweise V4A, gefertigt. Die Tiefe der Ablaufrinne 650 ist größer als die Tiefe der Salzwand, so dass die Salzwand beabstandet zu den Wänden der U-förmigen Ablaufrinne steht. Die Salzwand ist dabei so in der Ablaufrinne 650 gelagert, dass die Salzbausteine 35 nicht von Wasser in der Ablaufrinne beschädigt werden.

Die Ablaufrinne 650 steht mit einem Abflussrohr 66 in Verbindung. An der Verbindung zwischen Ablaufrinne und Abflussrohr ist ein Ablaufventil 67 vorgesehen. Das Abflussrohr 66 ist zum Anschluss an eine Entwässerung am Einbauort der Fleischreifekammer ausgebildet, indem ein Durchbruch durch eine Kammerwand vorgesehen ist (nicht dargestellt), dessen Position in Abstimmung auf die spezifische Einbausituation gewählt werden kann.

In Figur 7 ist ein Längsschnitt der Fleischreifekammer gemäß der zweiten Ausführungsform der Erfindung von der Seite aus gesehen dargestellt, in welchem die aus Edelstahl gebogene Ablaufrinne 650 im Querschnitt zu sehen ist.

Im Innenraum 2 der Fleischreifekammer 1 ist ein Regal 25 positioniert, auf welchem kleinere Fleischstücke gelagert werden können. Das Ausstellungsregal ist mit verstellbaren Einlegeböden versehen, so dass der Abstand zwischen den Einlegeböden der Größe der Fleischstücke angepaßt werden kann. Über dem Regal ist eine Beleuchtung 84 angebracht. Diese kann auch zur Entkeimung ausgelegt sein, Gerade beim Einsatz eines Verdampferkühlers ist die Gefahr der Belastung der Luft im Innenraum 2 mit Mikroorganismen erhöht. Auf der Lamellenoberfläche des Wärmeübertragers können sich Kondensat und Staubpartikel mit organischen Bestandteilen ablagern und einen perfekten Nährboden für Mikroorganismen bilden. Um dieser Gefahr entgegenzuwirken sieht die Erfindung vor, Fleischstücke im Innenraum 2, insbesondere auf dem Regal 25, mit UV-C-Strahlung bei einer Wellenlänge von 253,7 nm zu beleuchten. Diese Wellenlänge wirkt auf Mikroorganismen wie Bakterien, Schimmel, Hefen und Viren tödlich. Dafür kann beispielsweise eine BÄRO UV-C-Kompaktlampe IP 65 der Bäro GmbH & Co. KG, Leichlingen, Deutschland, als sogenanntes Fleischlicht eingesetzt werden.

Auch der Innenraum 2 selbst wird beleuchtet. Ebenso unterstreicht es den optischen Eindruck der Salzwand, diese von hinten zu beleuchten. Die LED-Beleuchtung im Innenraum 82 sowie die LED-Beleuchtung der Salzwand, 83 sind der Übersichtlichkeit halber in Figur 7 nicht im Detail eingezeichnet.

Die Erfindung setzt die Salzwand oder die Salzwand mit Solevernebler in der Fleischreifekammer zusammen mit einer Verdampfereinheit mit elektronischer Steuerung (zum Beispiel 1° Celsius), integrierter Dampfbefeuchtung auf 90% Luftfeuchtigkeit, sowie der Verwendung von einer 3-fach entspiegelten Isolierglasscheibe für den Blick auf das reifende Fleisch ein. Eine LED-Beleuchtung unterstützt den Einblick beziehungsweise die Präsentation des Fleisches, Es hat sich dabei nach Erfahrung der Erfinder herausgestellt, dass die Salzwand unangenehme Gerüche sowie Bakterien und kleinste Schwebeteilchen bindet. Die Schimmelbildung auf dem Fleisch und Schmierbildung auf dem Knochen werden wesentlich reduziert. Durch die solehaltige Luft werden die Zartheit und der Geschmack des mehrwöchig gereiften Rindfleisches verbessert. Durch die hygroskopische Eigenschaft des Salzes reift das Fleisch schneller. Eine dreifach entspiegelte Verglasung ermöglicht dem Kunden die Beobachtung des Reifeprozesses in der Metzgerei.

Es ist dem Fachmann ersichtlich, dass die Erfindung nicht auf die vorstehend beschriebenen Ausführungsbeispiele beschränkt ist, sondern vielmehr in vielfältiger Weise variiert werden kann. Insbesondere können die Merkmale der einzelnen Ausführungsbeispiele auch miteinander kombiniert oder gegeneinander ausgetauscht werden.

### Bezugszeichenliste

- 1: Fleischreifekammer, Kühlzelle
- 10: Deckel
- 11: Vorderwand
- 12: Rückwand, Kühlzellenrückwand
- 13: Seitenwand
- 14: Seitenwand
- 15: Boden, Zellenboden
- 2: Innenraum
- 25: Ausstellungsregal
- 29: Tauwasserableitung
- 3: Salzwand
- 35: Salzbaustein
- 312: Abstand zwischen Salzwand und Rückwand
- 4: Fenster
- 45: Glasleiste
- 5: Tür
- 6: Sockeltisch
- 62: Überstand
- 65: Rinne, Ablaufrinne
- 650: Rinne, Ablaufrinne
- 66: Abfluss
- 67: Ablaufventil
- 68: Tropfwasserablauf
- 69: Lagerung des Sockeltisches
- 7: Steuereinheit, Steuerung
- 72: Hygrometer
- 75: Thermometer
- 82: LED-Beleuchtung des Innenraums
- 83: LED-Beleuchtung der Salzwand,
- 84: Beleuchtung des Regals beziehungsweise der Fleischstücke
- 9: Wärmeübertrager
- 93: Wasserzulauf
- 94: Kältemittelleitungen
- 95: Stromzuleitungen

## Patentansprüche

1. Fleischreifekammer (1) zur Durchführung eines Verfahrens für die Reifung von Fleisch bei einer Luftfeuchte von 90 % mit
einem Deckel (10) und einem Boden (15) sowie einer Vorderwand (11), einer Rückwand (12) und zwei Seitenwänden (13, 14),
welche einen Innenraum (2) zur Aufnahme zumindest eines Fleischstücks definieren und deren dem Innenraum zugewandte Flächen im Wesentlichen aus Edelstahl und/oder einem Kunststoff bestehen
wobei zumindest die Vorderwand (11) zumindest ein Fenster (4) aufweist, welches Einblick in den Innenraum (2) erlaubt,
und mit zumindest einer Salzquelle (3) in Form einer Salzwand (3) aus mehreren Salzbausteinen (35) im Innenraum, welche im Betrieb der Fleischreifekammer den Salzgehalt der Atmosphäre im Innenraum bestimmt, **dadurch gekennzeichnet, dass**
die Salzwand (3) auf einem Sockeltisch (6) fußt, welcher auf dem Boden (15) der Fleischreifekammer steht oder an zumindest einer Wand (12, 13, 14) oder dem Deckel (10) der Fleischreifekammer befestigt ist, wobei
der Sockeltisch (6) in Relation zur Tiefe der Salzwand (3) derartige Abmessungen hat, dass an zumindest einer Seite ein Überstand (62) des Sockeltisches gegenüber der Salzwand definiert wird,
wobei in dem Überstand (62) eine Rinne (65, 650) im wesentlichen parallel zur Salzwand (3) verläuft
und dass im Innenraum (2) eine Steuerungseinheit (7) für Luftfeuchtigkeit und Temperatur angeordnet ist und dass im Innenraum (2), bevorzugt am Deckel (10) der Fleischreifekammer, zumindest eine Verdampfereinheit angeordnet und mit der Steuerungseinheit verbunden ist.

2. Fleischreifekammer (1) nach Anspruch 1,
**dadurch gekennzeichnet, dass**
die Salzquelle zumindest einen Solevernebler umfaßt.

3. Fleischreifekammer (1) nach einem der vorangegangenen Ansprüche,
**dadurch gekennzeichnet, dass**
die Fleischreifekammer eine Tür (5) für den Zutritt zum Innenraum aufweist.

4. Fleischreifekammer (1) nach einem der vorangegangenen Ansprüche,
**dadurch gekennzeichnet, dass**
der Innenraum (2) eine Grundfläche mit Seitenlängen gleich oder größer als etwa 800 mm, insbesondere gleich oder größer als 1200 mm, und einer Höhe gleich oder größer als etwa 2000 mm aufweist.

5. Fleischreifekammer (1) nach einem der vorangegangenen Ansprüche,
**dadurch gekennzeichnet, dass**
das Fenster (4) zumindest eine Scheibe aus Isolierglas umfasst, insbesondere Dreifach-Isolierglas, bevorzugt entspiegeltes Dreifach-Isolierglas.

6. Fleischreifekammer (1) nach einem der vorangegangenen Ansprüche,
**dadurch gekennzeichnet, dass**
die Fleischreifekammer im Innenraum
zumindest eine Aufhängevorrichtung zur hängenden Lagerung von Fleischstücken und/oder
ein Regal (25) mit zumindest einem Regalboden, bevorzugt zumindest zwei Regalböden, aufweist, auf welchen Fleischstücke positioniert werden können, wobei die Aufhängevorrichtung und/oder das Regal im Wesentlichen aus Edelstahl und/oder Kunststoff besteht.

7. Fleischreifekammer (1) nach Anspruch 1,
**dadurch gekennzeichnet, dass**
die Rinne (65, 650) zumindest einen Abfluss (66) aufweist, welcher insbesondere mit einem Ablaufventil (67) verschließbar ist.

8. Fleischreifekammer (1) nach einem der vorangegangenen Ansprüche,
**dadurch gekennzeichnet, dass**
die Fleischreifekammer Durchbrüche in Deckel (10) und/oder Boden (15) und/oder Wänden (11, 12, 13, 14) für zumindest eine Stromleitung (95) und/oder zumindest eine Wasserleitung (93) und/oder zumindest eine Kältemittelleitung (94) umfaßt.

9. Fleischreifekammer (1) nach einem der vorangegangenen Ansprüche,
**dadurch gekennzeichnet, dass**
die Salzwand (3) beabstandet zur nächsten benachbarten Wand der Fleischreifekammer, insbesondere zu deren Rückwand (12), angeordnet ist,
wobei der Abstand (311) zwischen der Salzwand und der nächsten benachbarten Wand der Fleischreifekammer insbesondere der Tiefe der Salzwand entspricht und beispielsweise im Bereich zwischen etwa 10 mm und etwa 120 mm, bevorzugt bei etwa 50 mm liegt.

10. Fleischreifekammer (1) nach einem der vorangegangenen Ansprüche,
**dadurch gekennzeichnet, dass**
im Innenraum (2), bevorzugt am Deckel (10) der Fleischreifekammer, zumindest ein Wärmeübertrager (9) angeordnet und mit der Steuerungseinheit (7) verbunden ist, insbesondere ein Luftkühler, bevorzugt ein mit Kältemittel betreibbarer Luftkühler.

11. Fleischreifekammer (1) nach Anspruch einem der vorangegangenen Ansprüchen,
**dadurch gekennzeichnet, dass**
die Verdampfereinheit ein integraler Bestandteil des Luftkühlers ist.

12. Fleischreifekammer (1) nach einem der vorangegangenen Ansprüche,
**dadurch gekennzeichnet, dass**
im Innenraum (2) zumindest ein Hygrometer (72) und/oder zumindest ein Thermometer (75) angeordnet und mit der Steuerungseinheit (7) verbunden sind.

13. Fleischreifekammer (1) nach einem der vorangegangenen Ansprüche,
**dadurch gekennzeichnet, dass**
im Innenraum (2) zumindest eine Lampe (84) zur Beleuchtung von Fleischstücken und/oder zumindest eine Lampe (83) zur Beleuchtung der Salzwand, insbesondere zwischen der Salzwand und deren nächster benachbarter Wand, angebracht ist.

14. Fleischreifekammer (1) nach Anspruch 13,
**dadurch gekennzeichnet, dass**
zwischen der Salzwand und deren nächster benachbarter Wand mehrere Lampen (83), bevorzugt mehrere LED-Leuchten, angebracht sind.

15. Verfahren für die Reifung von Fleisch mit folgenden Schritten
a) Bereitstellen zumindest eines der Reifung zuzuführenden Fleischstücks,
b) Einbringen des Fleischstücks in eine Fleischreifekammer (1) nach einem der vorangegangenen Ansprüche,
c) Lagern des Fleischstücks in der Fleischreifekammer bei einer Temperatur im Bereich zwischen etwa 1 und etwa 1,5°C bei einer relativen Luftfeuchtigkeit von 90 %.

16. Verfahren nach Anspruch 15,
**gekennzeichnet durch** Schritt
d) Kontrolle des Fleisches nach optischen Eigenschaften seiner Oberfläche und/oder **durch** Verkostung von Probestücken.

17. Verfahren nach Anspruch 15 oder 16,
**dadurch gekennzeichnet, dass**
die Lagerung des Fleischstücks für die Dauer im Bereich von etwa vier Wochen bis etwa acht Wochen, bevorzugt für eine Dauer von etwa sechs Wochen, durch geführt wird.

## Claims

1. Meat maturing cabinet (1) for performing a method for maturing meat at a humidity of 90%, comprising a top (10) and a floor (15) as well as a front wall (11), a rear wall (12) and two sidewalls (13, 14) which define an internal space (2) for accommodating at least one piece of meat and of which surfaces facing towards the internal space consist substantially of high-grade steel and/or a synthetic material, wherein at least the front wall (11) has at least one window (4) permitting a view into the internal space (2), and comprising at least one salt source (3) in the form of a salt wall (3) consisting of a plurality of salt bricks (35) in the internal space, which during operation of the meat maturing cabinet determines the salt content of the atmosphere in the internal space, **characterised in that** the salt wall (3) stands on a plinth table (6) which stands on the floor (15) of the meat maturing cabinet or is affixed to at least one wall (12, 13, 14) or the top (10) of the meat maturing cabinet, wherein the plinth table (6) is dimensioned in relation to the depth of the salt wall (3) such that on at least one side a projection (62) of the plinth table is defined with respect to the salt wall, wherein in the projection (62) a channel (65, 650) extends substantially in parallel with the salt wall (3), and that a control unit (7) for controlling humidity and temperature is arranged in the internal space (2) and that in the internal space (2), preferably on the top (10) of the meat maturing cabinet, at least one evaporator unit is arranged and is connected to the control unit.

2. Meat maturing cabinet (1) as claimed in claim 1, **characterised in that** the salt source comprises at least one brine nebulizer.

3. Meat maturing cabinet (1) as claimed in any one of the preceding claims, **characterised in that** the meat maturing cabinet has a door (5) to allow access to the internal space.

4. Meat maturing cabinet (1) as claimed in any one of the preceding claims, **characterised in that** the internal space (2) has a bottom surface with side lengths greater than or equal to about 800 mm, in particular greater than or equal to 1200 mm, and a height greater than or equal to about 2000 mm.

5. Meat maturing cabinet (1) as claimed in any one of the preceding claims, **characterised in that** the window (4) comprises at least one pane of insulating glass, in particular triple insulating glass, preferably non-reflecting triple insulating glass.

6. Meat maturing cabinet (1) as claimed in any one of the preceding claims, **characterised in that** the meat maturing cabinet has in the internal space at least one suspension apparatus for storing pieces of meat in a suspended manner and/or a shelf (25) having at least one shelf base, preferably at least two shelf bases, on which pieces of meat can be positioned, wherein the suspension apparatus and/or the shelf consists substantially of high-grade steel and/or synthetic material.

7. Meat maturing cabinet (1) as claimed in claim 1, **characterised in that** the channel (65, 650) has at least one outlet (66) which can be closed in particular by a drain valve (67).

8. Meat maturing cabinet (1) as claimed in any one of the preceding claims, **characterised in that** the meat maturing cabinet comprises apertures in the top (10) and/or floor (15) and/or walls (11, 12, 13, 14) for at least one power line (95) and/or at least one water line (93) and/or at least one refrigerant line (94).

9. Meat maturing cabinet (1) as claimed in any one of the preceding claims, **characterised in that** the salt wall (3) is arranged spaced apart from the next adjacent wall of the meat maturing cabinet, in particular the rear wall (12) thereof, wherein the spaced interval (311) between the salt wall and the next adjacent wall of the meat maturing cabinet corresponds in particular to the depth of the salt wall and e.g. is in the range between about 10 mm and about 120 mm, preferably about 50 mm.

10. Meat maturing cabinet (1) as claimed in any one of the preceding claims, **characterised in that** at least one heat exchanger (9) is arranged in the internal space (2), preferably on the top (10) of the meat maturing cabinet and is connected to the control unit (7), in particular an air cooler, preferably an air cooler which can be operated with refrigerant.

11. Meat maturing cabinet (1) as claimed in any one of the preceding claims, **characterised in that** the evaporator unit is an integral component of the air cooler.

12. Meat maturing cabinet (1) as claimed in any one of the preceding claims, **characterised in that** at least one hygrometer (72) and/or at least one thermometer (75) are arranged in the internal space (2) and are connected to the control unit (7).

13. Meat maturing cabinet (1) as claimed in any one of the preceding claims, **characterised in that** at least one lamp (84) for illuminating pieces of meat and/or at least one lamp (83) for illuminating the salt wall is mounted in the internal space (2), in particular between the salt wall and the next adjacent wall thereof.

14. Meat maturing cabinet (1) as claimed in claim 13, **characterised in that** a plurality of lamps (83), preferably a plurality of LED lights, are mounted between the salt wall and the next adjacent wall thereof.

15. Method for maturing meat comprising the steps of:
a) providing at least one piece of meat to be supplied for maturing purposes,
b) introducing the piece of meat into a meat maturing cabinet (1) as claimed in any one of the preceding claims,
c) storing the piece of meat in the meat maturing cabinet at a temperature in the range between about 1 and about 1.5°C at a relative humidity of 90%.

16. Method as claimed in claim 15, **characterised by** the step of
d) monitoring the meat according to visual characteristics of the surface thereof and/or by tasting sample pieces.

17. Method as claimed in claim 15 or 16, **characterised in that** storage of the piece of meat is performed for the period ranging from about four weeks to about eight weeks, preferably for a period of about 6 weeks.

## Revendications

1. Chambre de maturation de viande (1) pour l'exécution d'un procédé pour la maturation de viande avec une humidité d'air de 90 %, avec
un couvercle (10) et un fond (15) ainsi qu'une paroi avant (11), une paroi arrière (12) et deux parois latérales (13, 14),
lesquels définissent un espace intérieur (2) pour la réception d'au moins une pièce de viande et dont les surfaces opposées à l'espace intérieur sont essentiellement en acier et/ou en matière plastique,
dans laquelle au moins la paroi avant (11) comporte au moins une fenêtre (4) permettant d'observer l'espace intérieur (2),
et avec au moins une source de salaison (3) sous la forme d'une paroi de sel (3) constituée de plusieurs briques de sel (35) dans l'espace intérieur, laquelle détermine la teneur en sel de l'atmosphère dans l'espace intérieur en état de fonctionnement de la chambre de maturation de viande,
**caractérisée en ce que** :
la paroi de sel (3) repose sur une table à socle (6) dressée sur le fond (15) de la chambre de maturation de viande ou fixée contre au moins une paroi (12, 13, 14) ou le couvercle (10) de la chambre de maturation de viande, où
la table à socle (6) a des dimensions en rapport avec la profondeur de la paroi de sel (3) telles qu'un dépassement (62) de la table à socle par rapport à la paroi de sel est défini sur au moins un côté,
où une gouttière (65, 650) s'étend dans le dépassement (62) sensiblement parallèlement à la paroi de sel (3),
et **en ce qu'**une unité de commande (7) pour l'humidité de l'air et la température est disposée dans l'espace intérieur (2) et **en ce qu'**au moins une unité d'évaporation est disposée dans l'espace intérieur (2), préférentiellement contre le couvercle (10) de la chambre de maturation de viande, et est reliée à l'unité de commande.

2. Chambre de maturation de viande (1) selon la revendication 1, **caractérisée en ce que** :
la source de salaison comprend au moins un nébuliseur de saumure.

3. Chambre de maturation de viande (1) selon l'une des revendications précédentes,
la chambre de maturation de viande étant **caractérisée en ce qu'**elle présente une porte (5) d'accès à l'espace intérieur.

4. Chambre de maturation de viande (1) selon l'une des revendications précédentes, **caractérisée en ce que** :
l'espace intérieur (2) a une surface de base avec les longueurs de côtés égale ou supérieure à environ 800 mm, en particulier égale ou supérieure à 1200 mm, et une hauteur égale ou supérieure à environ 2000 mm.

5. Chambre de maturation de viande (1) selon l'une des revendications précédentes, **caractérisée en ce que** :
la fenêtre (4) comporte au moins une vitre en verre isolant, en particulier en verre isolant triple, préférentiellement en verre isolant triple antireflet.

6. Chambre de maturation de viande (1) selon l'une des revendications précédentes, la chambre de maturation de viande étant **caractérisée en ce qu'**elle comporte :
dans l'espace intérieur, au moins un dispositif d'accrochage pour le stockage de pièces de viande suspendues et/ou
une étagère (25) avec au moins un rayon, préférentiellement au moins deux rayons, sur laquelle peuvent être placées des pièces de viande,
le dispositif d'accrochage et/ou l'étagère étant essentiellement en acier et/ou en matière plastique.

7. Chambre de maturation de viande (1) selon la revendication 1, **caractérisée en ce que** :
la gouttière (65, 650) présente au moins un écoulement (66) obturable en particulier par une vanne de vidange (67).

8. Chambre de maturation de viande (1) selon l'une des revendications précédentes, la chambre de maturation de viande étant **caractérisée en ce qu'**elle comprend des traversées dans le couvercle (10) et/ou le fond (15) et/ou les parois (11, 12, 13, 14) pour au moins un câble électrique (95) et/ou au moins une conduite d'eau (93) et/ou au moins une conduite de fluide frigorigène (94).

9. Chambre de maturation de viande (1) selon l'une des revendications précédentes, **caractérisée en ce que** :
la paroi de sel (3) est espacée de la paroi la plus proche de la chambre de maturation de viande, en particulier de sa paroi arrière (12),
dans laquelle l'espacement (311) entre la paroi de sel et la paroi la plus proche de la chambre de maturation de viande correspond en particulier à l'épaisseur de la paroi de sel et est par exemple compris entre 10 mm environ et 120 mm environ, préférentiellement égal à 50 mm.

10. Chambre de maturation de viande (1) selon l'une des revendications précédentes, **caractérisée en ce que** :
au moins un échangeur thermique (9), en particulier un refroidisseur d'air, préférentiellement un refroidisseur d'air fonctionnant avec un fluide frigorigène, est disposé dans l'espace intérieur (2), préférentiellement contre le couvercle (10) de la chambre de maturation de viande, et est relié à l'unité de commande (7).

11. Chambre de maturation de viande (1) selon l'une des revendications précédentes, **caractérisée en ce que** :
l'unité d'évaporation est un composant intégré du refroidisseur d'air.

12. Chambre de maturation de viande (1) selon l'une des revendications précédentes, **caractérisée en ce que** :
au moins un hygromètre (72) et/ou au moins un thermomètre (75) sont disposés dans l'espace intérieur (2) et reliés à l'unité de commande (7).

13. Chambre de maturation de viande (1) selon l'une des revendications précédentes, **caractérisée en ce que** :
au moins une lampe (84) pour éclairer les pièces de viande et/ou au moins une lampe (83) pour éclairer la paroi de sel sont disposées dans l'espace intérieur (2), en particulier entre la paroi de sel et la paroi la plus proche de celle-ci.

14. Chambre de maturation de viande (1) selon la revendication 13, **caractérisée en ce que** :
plusieurs lampes (83), préférentiellement plusieurs lampes à LED, sont disposées entre la paroi de sel et la paroi la plus proche de celle-ci.

15. Procédé pour la maturation de viande, comprenant les étapes suivantes :
a) préparation d'au moins une pièce de viande à soumettre à la maturation,
b) mise en place de la pièce de viande dans une chambre de maturation de viande (1) selon l'une des revendications précédentes,
c) stockage de la pièce de viande dans la chambre de maturation de viande à une température comprise entre 1°C environ et 1,5°C environ pour une humidité relative de 90 %.

16. Procédé selon la revendication 15, **caractérisé par** l'étape :
d) contrôle de la viande par contrôle des propriétés optiques de sa surface et/ou par dégustation de morceaux d'échantillons.

17. Procédé selon la revendication 15 ou 16, **caractérisé en ce que** :
le stockage de la pièce de viande est effectué pendant une durée comprise entre environ quatre semaines et environ huit semaines, préférentiellement pendant une durée d'environ six semaines.
